# FASCICULE DE BREVET EUROPEEN

(11) **EP 1 592 599 B1**
(45) Date de publication et mention de la délivrance du brevet: **15.04.2009**
(21) Numéro de dépôt: 03816240.0
(22) Date de dépôt: 11.02.2003
(51) Int. Cl.: B62D 6/00, B60K 31/00, B60T 7/12

(54) **PROCEDE DE RALENTISSEMENT EN VIRAGE D UN VEHICULE**
VERFAHREN ZUR VERRINGERUNG DER GESCHWINDIGKEIT EINES FAHRZEUGS IN KURVEN
METHOD OF REDUCING THE TURNING SPEED OF A VEHICLE

(43) Date de publication de la demande: 09.11.2005
(73) Titulaire: NEXTER Systems, 42328 Roanne (FR)
(72) Inventeur: PAPE, Olivier, F-78230 Le Pecq (FR); URVOY, Emile, F-91470 Limours (FR); LEVEQUE, Stéphane, F-78370 Plaisir (FR)
(74) Mandataire: Célanie, Christian
(86) Numéro de dépôt international: PCT/FR2003/000436
(87) Numéro de publication internationale: WO 2004/080782

(56) Documents cités:
- EP-A- 0 448 059
- EP-A- 0 788 922
- WO-A-01/56849
- FR-A- 2 681 449
- US-A- 5 315 295
- US-A- 6 141 613

## Description

Le secteur technique de la présente invention est celui procédés et automatismes de commande du freinage de véhicules.

On connaît un procédé décrit dans le brevet FR-2681449 pour maîtriser le comportement en virage d'un véhicule animé d'une certaine vitesse, un véhicule chenillé ou un véhicule à roues, pour assurer la stabilité du véhicule en virage en évitant les survirages ou les dérapages.

Suivant ce procédé, on maîtrise le virage en le sécurisant mais on n'adapte pas automatiquement la vitesse du véhicule au virage, ce qui est une problématique connexe et complémentaire mais différente du problème posé dans l'invention.

Le brevet FR-A-2742888 décrit un autre procédé d'aide au pilotage d'un véhicule motorisé se déplaçant sur une piste ou route, apte à superposer à une première image représentative de la piste vue par un opérateur, une seconde image représentative de la trajectoire de consigne que doit suivre le véhicule pour atteindre un point de passage futur de la piste choisi par l'opérateur, l'image de la trajectoire de consigne étant limitée à la distance d'arrêt minimum de sécurité du véhicule sur cette trajectoire à sa vitesse actuelle.

Pour cela, on prolonge ladite trajectoire de consigne, au-delà de ladite distance d'arrêt et pour la vitesse actuelle du véhicule, par au moins une première information visuelle représentative des possibilités maximum de virage autorisées pour un virage en cours ou à venir de manière à permettre à l'opérateur d'apprécier visuellement la corrélation entre la courbure réelle du virage en cours ou à venir et les possibilités maximales autorisées pour prendre ce virage.

Ce procédé permet donc d'anticiper le virage et c'est l'opérateur qui doit adapter la vitesse dans le virage.

Plus particulièrement, en terrain non structuré, le pilote ne sait pas apprécier la vitesse nécessaire pour réaliser un virage. Cette erreur d'appréciation peut mettre le véhicule et ses occupants en danger.

Le document WO 01/56849 vise surtout à éviter des obstacles connus par la topographie. Le dispositif et procédé décrits prennent en compte un ensemble de moyens pour disposer des caractéristiques de la voie sur laquelle circule le véhicule et les dangers potentiels et un autre ensemble de moyens permettant de déterminer la trajectoire actuelle du véhicule relativement à la voie de circulation. L'unité de commande entre en fonction en cas de perte de traction sur une roue et si la trajectoire prévisible place le véhicule en danger. Selon ce document, il est impératif de connaître précisément le terrain afin d'écarter la trajectoire du véhicule d'un obstacle ou d'un danger connu.

Le brevet US-6141613 décrit la commande automatique ou semi-automatique d'un véhicule afin d'optimiser le déplacement à vitesse faible. On agit donc sur les freins afin de calculer l'estimation du couple différentiel à appliquer entre les deux chenilles pour faire virer le véhicule. On cherche donc à améliorer la qualité de la commande du rayon de virage.

Le but de la présente invention est de fournir un système et un procédé mettant en oeuvre un automatisme de ralentissement d'un véhicule permettant au pilote d'apprécier approximativement la vitesse nécessaire pour réaliser un virage sans mettre en danger le véhicule et ses occupants au moment du virage.

L'invention a donc pour objet un système de contrôle automatique en virage d'un véhicule, comprenant :
- un calculateur intégrant des lois cinématiques de commande du déplacement dudit véhicule permettant de déterminer au moins un diagramme en fonction des caractéristiques du véhicule ainsi que de son adhérence au sol, diagramme permettant de déterminer au moins une zone de sécurité de fonctionnement pour le véhicule,
- des moyens de mesure de la vitesse d'avancement V et la vitesse de lacet Ω dudit véhicule,
- des moyens pour déduire un point de fonctionnement réel sur ledit diagramme,
- des moyens pour mesurer les consignes d'avancement et de direction voulues par un opérateur,
- des moyens pour déduire sur le diagramme un point de fonctionnement voulu par l'opérateur , puis en fonction de l'écart entre ces deux points de fonctionnement, déterminer un nouveau point de fonctionnement corrigé au regard des lois cinématiques,
- des moyens pour déduire des ordres de consigne corrigés pour commander un premier actionneur (8) d'avancement et/ou un second actionneur de direction dudit véhicule, de façon à assurer le maintien du véhicule dans la zone de sécurité de fonctionnement.

L'invention concerne également un procédé de contrôle automatique en virage d'un véhicule, procédé dans lequel on introduit dans un calculateur de pilotage des lois cinématiques de commande du déplacement dudit véhicule permettant de déterminer au moins un diagramme en fonction des caractéristiques du véhicule ainsi que de son adhérence au sol, diagramme permettant de déterminer au moins une zone de sécurité de fonctionnement pour le véhicule, on mesure la vitesse d'avancement V et la vitesse de lacet Ω dudit véhicule, on en déduit un point de fonctionnement réel sur ledit diagramme, on mesure les consignes d'avancement et de direction voulues par un opérateur, on en déduit sur le diagramme un point de fonctionnement voulu par l'opérateur, puis en fonction de l'écart entre ces deux points de fonctionnement, on détermine un nouveau point de fonctionnement corrigé au regard des lois cinématiques et on en déduit des ordres de consigne corrigés pour commander un premier actionneur d'avancement et/ou un second actionneur de direction dudit véhicule, de façon à assurer le maintien du véhicule dans la zone de sécurité dé fonctionnement.

Avantageusement, on prévoit l'introduction d'une information relative à l'adhérence (µ) du véhicule sur le sol.

Avantageusement encore, on détermine la vitesse compatible (VC) du virage que l'on compare à la vitesse réelle (V) du véhicule pour saturer la commande de vitesse d'avancement et ralentir le véhicule en fonction de l'écart entre le point de fonctionnement de consigne et le point de fonctionnement conforme aux lois cinématiques.

Avantageusement encore, on sature la commande de vitesse par l'intermédiaire du calculateur d'injection du véhicule.

Avantageusement encore, on sature la commande de vitesse par l'intermédiaire de la pression du circuit de freinage.

Avantageusement encore, on sature la commande de vitesse par l'intermédiaire de la commande en couple du véhicule.

Avantageusement encore, on sature la commande de direction.

Avantageusement encore, on compare constamment la consigne affichée par l'opérateur et la commande imposée par le calculateur pour ramener la valeur mesurée au niveau de la valeur fournie par le calculateur.

Avantageusement encore, on établit des iso-consignes correspondant à une commande en courbure pour basses vitesses, à une commande en vitesse de lacet pour les vitesses moyennes et à une commande en accélération latérale pour les grandes vitesses.

Avantageusement encore, on intègre la cinématique du véhicule pour le sécuriser en évitant les dérapages et les pertes de contrôle du pilote.

Avantageusement encore, la cinématique du véhicule est intégrée sous formes d'ellipses, dans un plan Ax (Accélération longitudinale) / Ay (Accélération latérale) auxquelles sont comparés les points de fonctionnement.

Avantageusement encore, un point de fonctionnement à l'intérieur d'une première ellipse intérieure autorise une transmission des consignes avancement et direction aux actionneurs, un point de fonctionnement à l'intérieur d'une seconde ellipse intermédiaire est corrigé par une saturation de la consigne d'avancement avant transmission à l'actionneur d'avancement, un point de fonctionnement à l'intérieur d'une troisième ellipse externe est corrigé par une saturation de la consigne d'avancement et de la consigne de direction avant transmission respective aux actionneurs d'avancement et de direction.

Avantageusement encore, les ellipses sont inscrites dans un cercle de rayon fonction de l'adhérence

On définit une stratégie de ralentissement adaptant la vitesse du véhicule au virage désiré par le pilote pour établir des iso-consignes correspondant à une commande en courbure pour basses vitesses, une commande en vitesse de lacet pour les vitesses moyennes et une commande en accélération latérale pour les grandes vitesses.

Un tout premier avantage du procédé selon l'invention réside dans le fait que le véhicule est ralenti automatiquement en fonction de la consigne de direction donnée par l'opérateur.

Un autre avantage réside dans le fait que les ordres de l'opérateur sont limités dans la zone de fonctionnement respectant les lois cinématiques du véhicule conférant ainsi à l'automatisme une prise en charge du véhicule.

D'autres caractéristiques, détails et avantages de l'invention ressortiront plus clairement de la description donnée ci-après à titre indicatif en relation avec des dessins sur lesquels :
- la figure 1 représente le système de ralentissement d'un véhicule en virage,
- la figure 2 représente l'ensemble des zones dans lesquelles le véhicule peut se trouver, et
- la figure 3 représente un exemple de diagramme de fonctionnement du système.

On entend par lois cinématiques de commande du déplacement d'un véhicule un ensemble d'ellipses calculées dans un repère défini par les accélérations longitudinale et latérale en fonction de son adhérence au sol.

On entend par point de fonctionnement nominal, le point situé sur l'ellipse définie par une marge de sécurité par rapport à l'ellipse obtenue par les lois cinématiques de commande.

On suppose un véhicule en mouvement à une vitesse V sur un trajet structuré ou non, c'est-à-dire dont les virages sont connus et modélisés dans la mémoire du calculateur. Cette disposition peut être effectuée par exemple par l'incorporation d'une carte dans la mémoire du calculateur en liaison avec un système GPS. Le pilote du véhicule se trouvant à distance ou présent dans le véhicule commande un virage par l'intermédiaire d'une consigne de direction. L'invention se traduit donc par une série de fonctions intégrées dans un automatisme de mise en oeuvre du procédé.

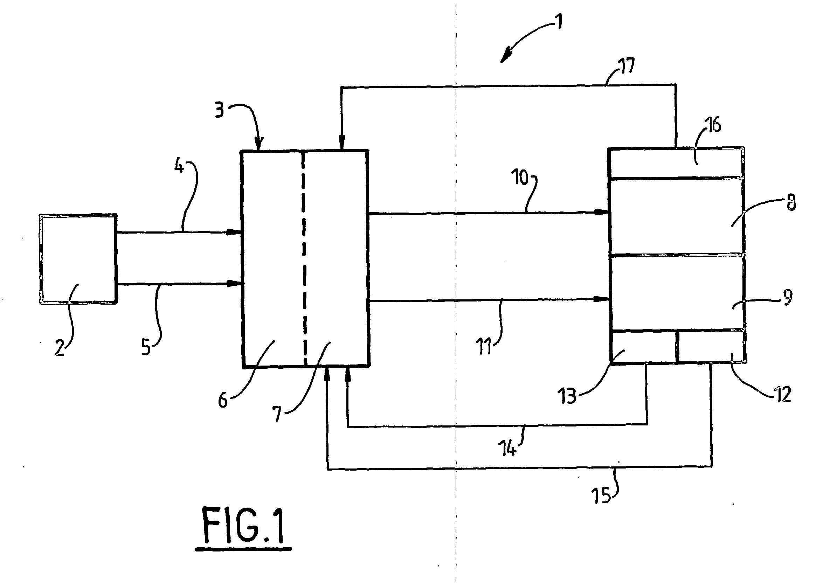

Sur la figure 1, on a représenté un véhicule 1 intégrant le système selon l'invention dans lequel l'opérateur 2 est soit présent dans le véhicule soit dispose de télécommandes peut agir via un calculateur 3. L'opérateur 2 dispose d'une commande d'avancement 4 et d'une commande de direction 5 pour piloter le véhicule 1. Les informations engendrées par ces commandes sont envoyées au calculateur qui comporte un certain nombre d'algorithmes mathématiques assurant des moyens d'asservissement 6 et des moyens de saturation et de commutation 7. Sur le véhicule proprement dit, on retrouve un actionneur d'avancement 8 et un actionneur de direction 9 commandés par les liaisons respectives 10 et 11 par le calculateur afin de modifier le comportement du véhicule comme il sera expliqué ci-après. Un ensemble de capteurs 12 et 13 permettent d'alimenter le calculateur 3 via les liaisons 14 et 15 en signaux électriques représentatifs de la vitesse linéaire V (ou axiale) du véhicule et de sa vitesse lacet Ω (ou radiale). Enfin, un boîtier 16 va déterminer l'adhérence µ du véhicule et va délivrer un signal au calculateur 3 via la ligne 17.

On comprend que l'actionneur d'avancement 8 va commander l'injection pour un moteur thermique au moyen d'un module approprié (non représenté) pour accélérer le véhicule et la pression du circuit de freinage pour freiner le véhicule. Si le véhicule est équipé d'une transmission électrique, le module agira sur une commande en courant électrique. L'actionneur de direction 9 agira sur une pompe du groupe hydraulique de direction s'il s'agit d'un véhicule chenillé ou sur la colonne de direction s'il s'agit d'un véhicule à roues directrices. Le capteur 12, de type connu, est principalement destiné à mesurer la vitesse linéaire du véhicule par exemple en mesurant la vitesse moyenne de rotation des roues du véhicule ou à l'aide d'un radar à effet Doppler. Le capteur 13 est destiné à mesurer la vitesse lacet par exemple à l'aide d'un capteur gyrométrique ou à partir de la commande de direction.

Le calculateur 3 à partir des signaux électriques délivrés va intervenir à la place de l'opérateur en transparence dès que le véhicule sortira de la zone de sécurité définie initialement.

On procède tout d'abord à une estimation de la vitesse compatible du virage VC à l'aide du capteur 12 en prenant en compte la connaissance cinématique du véhicule incorporée dans la mémoire du calculateur 3, l'adhérence µ du véhicule fournit par le boîtier est soit présumée par l'opérateur soit déterminée par le calcul, la commande de direction de l'opérateur et la vitesse actuelle V du véhicule. Cette estimation permet de fixer la vitesse maximale admissible pour le véhicule à l'intérieur d'une zone de sécurité. Pour éviter la mise en danger du véhicule, on commande la saturation de la commande d'avancement 10 de l'opérateur et de la commande de direction 11. La saturation de la commande d'avancement est utilisée de toute façon pour ralentir à volonté le véhicule lorsqu'on le souhaite. Cette décélération imposée par le processus de commande est définie en fonction de la vitesse du véhicule V, de la vitesse compatible du virage VC, de l'adhérence µ présumée par l'opérateur ou calculée, comme indiqué précédemment, et d'un paramètre identifié à partir de la connaissance cinématique du véhicule, à savoir le taux d'ouverture du virage admissible optimal λ. Cette saturation est appliquée en forçant la commande opérateur et en agissant soit sur le calculateur d'injection via un module d'adaptation si le véhicule est équipé d'un moteur thermique, soit sur la commande de frein, ou via une commande en couple s'il est équipé d'un moteur électrique.

En variante, suivant l'invention, on peut activer l'automatisme lorsque la vitesse lacet Ω du véhicule, l'adhérence µ présumée par l'opérateur ou calculée, et la vitesse actuelle V ne respectent plus les lois cinématiques du véhicule.

Le calculateur de l'automatisme commande alors le ralentissement du véhicule en fonction de l'écart entre le point de fonctionnement voulu par l'opérateur, c'est-à-dire la consigne de direction et la vitesse V du véhicule, et le point de fonctionnement respectant les lois de cinématique du véhicule.

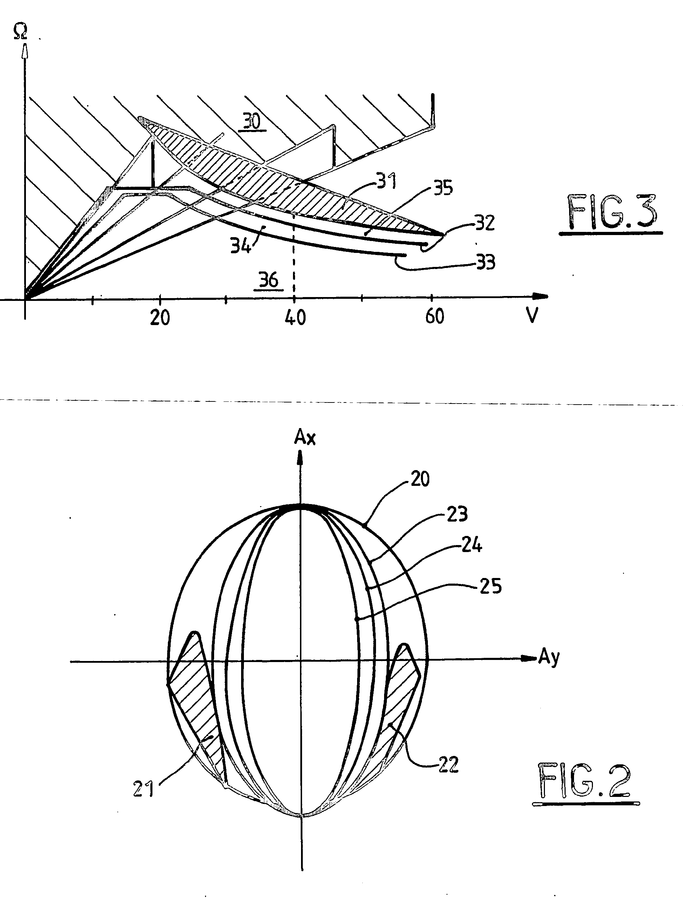

Sur la figure 2, on a représenté dans un repère orthonormé en abscisse l'accélération latérale Ay et en ordonnée l'accélération longitudinale Ax. On définit le cercle 20 de rayon µG représentatif des limites physiques d'adhérence du véhicule au sol. A l'intérieur de ce cercle, les zones 21 et 22 représentent les zones d'instabilité dans lesquelles le véhicule est incontrôlable. Une première ellipse 23 représente la limite de sécurité que le véhicule ne doit jamais franchir. Cette ellipse est définie en fonction des lois cinématiques du comportement du véhicule en virage. Une seconde ellipse 24, de rayon inférieur à celui de l'ellipse 23, représente l'ouverture du virage que l'on autorise au véhicule concerné. Globalement, cette ellipse 24 est fonction du taux d'ouverture du virage. Une troisième ellipse 25, de rayon inférieur à celui de l'ellipse 24, représente le domaine nominal de fonctionnement du véhicule.

On suppose maintenant que l'opérateur impose une commande conduisant le véhicule à se situer en dehors du cercle 20 ou des ellipses 23 et 24, le procédé selon l'invention permet de brider la commande de direction 11 de l'opérateur en fonction de la vitesse d'avancement pour ralentir le véhicule. Ce ralentissement permet de ramener le véhicule 1 dans la zone définie par l'ellipse 25.

Si le véhicule se trouve seulement en dehors de l'ellipse 24, la commande de direction 11 de l'opérateur reste libre mais on applique une consigne de freinage 4 afin de ralentir le véhicule pour le ramener dans le domaine nominal de fonctionnement défini par l'ellipse 25.

Si le véhicule se situe dans la zone définie par l'ellipse 25 l'opérateur reste libre de guider son véhicule.

Sur la figure 3, on a représenté, pour un véhicule chenillé équipé d'un groupe hydraulique de direction, le diagramme vitesse de lacet Ω d'un véhicule en fonction de sa vitesse linéaire V définissant pour l'automatisme des plages de fonctionnement, de prise en charge à la place de l'opérateur et d'interdiction au véhicule d'entrer dans certaines plages de vitesse lacet. On définit tout d'abord une zone 30 constituant un domaine inaccessible technologiquement par le véhicule et une zone 31 constituant un domaine instable pour le véhicule et, ce, pour une vitesse linéaire allant jusqu'à par exemple 60 km/h. Bien entendu, cette vitesse dépend du véhicule en cause. On définit une courbe 32 correspondant au débattement maximal de l'organe de commande de direction du véhicule et représentant la vitesse de lacet en fonction de la vitesse linéaire et de l'adhérence avec une marge de 60% de la vitesse lacet théorique compatible avec l'adhérence. On définit également une même courbe 33 correspondant à une marge de 50%. La zone 34 entre les courbes 32 et 33 correspond alors à un domaine de commande de direction libre et de commande automatique de freinage permettant de s'écarter de la zone critique en environ 2 secondes pour une vitesse moyenne par exemple inférieure à 40 km/h. La zone 35, entre la zone 31 et la courbe 33, correspond à un domaine fonction de la vitesse d'avancement du véhicule, au delà de 40 km/h, dans lequel la commande de direction est libre, mais la commande de freinage est bornée par rapport à l'accélération latérale du véhicule. La zone 36 correspond à un domaine de commande de direction et d'avancement libre et dans lequel on peut conserver la commande automatique d'avancement tant que la commande d'avancement donnée par l'opérateur n'est pas inférieure à la commande automatique d'accélération. Cette commande d'avancement est convertie bien entendu en accélération du véhicule.

A l'intérieur de la zone 36 dans un virage, l'opérateur peut continuer à accélérer et la vitesse V du véhicule tend vers la vitesse VC compatible du virage. L'automatisme impose alors à l'opérateur de donner une commande d'accélération évitant de mettre en difficulté le véhicule.

Si l'opérateur continue à accélérer ou maintient sa vitesse et si la vitesse du véhicule est égale à la vitesse compatible du virage, le procédé n'accélère plus le véhicule et réalise normalement le virage.

Si l'opérateur impose un braquage plus serré et que la vitesse du véhicule est supérieure à la vitesse compatible du virage, alors le virage est limité par le procédé selon l'invention de manière à ne pas mettre en danger le véhicule tout en réalisant le plus grand virage admissible dans la zone 35 à la marge choisie près. Simultanément, l'automatisme commande le freinage du véhicule en respectant les données cinématiques.

Si l'opérateur freine moins en virage que nécessaire, l'automatisme ignore sa commande.

Si l'opérateur freine et que la vitesse du véhicule est inférieure à la vitesse compatible du virage, la consigne de direction sera libre tant que le freinage de l'opérateur sera supérieur au freinage de l'automatisme pour prendre en compte ce freinage sans mettre en danger le véhicule.

Pour la direction du véhicule, la plage de commande est adaptée au domaine où le comportement du véhicule en virage est présumé stable et où la compensation par la commande de l'influence des changements de rapport de boîte de vitesse sur le virage est possible. Les iso-consignes résultantes correspondent à :
- une commande en courbure pour les basses vitesse,
- une commande en vitesse de lacet pour les vitesses moyennes, permettant les compensations des non-linéarités lors des changements de rapport,
- une commande en accélération latérale pour les grandes vitesses, car les organes de commande le plus souvent envisagées sont à faibles débattements.

L'automatisme selon l'invention sera activé quand la consigne de direction sera incompatible avec la vitesse actuelle du véhicule, avec une marge de 50% environ. La différence de marge entre 50 et 60% de l'accélération maximale possible sera utilisée pour décélérer le véhicule sans sortir du domaine de fonctionnement.

En variante, on peut prévoir une commande à 100% du virage, avec une marge à 60%. Si l'opérateur dépasse cette commande de manière intentionnelle, un retour physique l'en informe et l'automatisme se déclenche.

On voit qu'avantageusement le véhicule ne dérape pas. Si on utilise un organe de télé-opération de faible débattement, un palonnier par exemple, on peut alors affecter automatiquement les rayons de courbure minimale réalisable au débattement maximal de l'organe de télé-opération. De plus, l'automatisme ne se déclenche qu'à un point déterminé de la commande de télé-opération paramétrable. L'automatisme en diminuant la vitesse provoque l'augmentation des virages accessibles par la commande maximale. Ainsi, lorsque l'automatisme est déclenché, le virage se resserre naturellement.

Le schéma ci-dessus met clairement en évidence les domaines de fonctionnement de la variante.

Les dévers et pente sont pris en compte en recalant les données cinématiques du véhicule à partir des angles de lacet et tangage filtrés, mesurés par une centrale inertielle.

## Revendications

1. Système de contrôle automatique en virage d'un véhicule, comprenant :
- un calculateur (3) intégrant des lois cinématiques de commande du déplacement dudit véhicule permettant de déterminer au moins un diagramme en fonction des caractéristiques du véhicule ainsi que de son adhérence au sol, diagramme permettant de déterminer au moins une zone de sécurité de fonctionnement pour le véhicule,
- des moyens de mesure (12, 13) de la vitesse d'avancement V et la vitesse de lacet Ω dudit véhicule,
- des moyens pour déduire un point de fonctionnement réel sur ledit diagramme,
- des moyens pour mesurer les consignes d'avancement et de direction voulues par un opérateur (2),
- des moyens pour déduire sur le diagramme un point de fonctionnement voulu par l'opérateur (2), puis en fonction de l'écart entre ces deux points de fonctionnement, déterminer un nouveau point de fonctionnement corrigé au regard des lois cinématiques,
- des moyens pour déduire des ordres de consigne corrigés pour commander un premier actionneur (8) d'avancement et/ou un second actionneur (9) de direction dudit véhicule, de façon à assurer le maintien du véhicule dans la zone de sécurité de fonctionnement.

2. Procédé de contrôle automatique en virage d'un véhicule (1), procédé dans lequel on introduit dans un calculateur de pilotage (3) des lois cinématiques de commande du déplacement dudit véhicule permettant de déterminer au moins un diagramme en fonction des caractéristiques du véhicule ainsi que de son adhérence au sol, diagramme permettant de déterminer au moins une zone de sécurité de fonctionnement pour le véhicule, on mesure la vitesse d'avancement V et la vitesse de lacet Ω dudit véhicule, on en déduit un point de fonctionnement réel sur ledit diagramme, on mesure les consignes d'avancement et de direction voulues par un opérateur (2), on en déduit sur le diagramme un point de fonctionnement voulu par l'opérateur (2), puis en fonction de l'écart entre ces deux points de fonctionnement, on détermine un nouveau point de fonctionnement corrigé au regard des lois cinématiques et on en déduit des ordres de consigne corrigés pour commander un premier actionneur (8) d'avancement et/ou un second actionneur (9) de direction dudit véhicule, de façon à assurer le maintien du véhicule dans la zone de sécurité de fonctionnement.

3. Procédé de contrôle automatique selon la revendication 2, **caractérisé en ce qu'**on prévoit l'introduction d'une information relative à l'adhérence (µ) du véhicule sur le sol.

4. Procédé de contrôle automatique selon la revendication 2 ou 3, **caractérisé en ce qu'**on détermine la vitesse compatible (VC) du virage que l'on compare à la vitesse réelle (V) du véhicule pour saturer la commande de vitesse d'avancement et ralentir le véhicule en fonction de l'écart entre le point de fonctionnement de consigne et le point de fonctionnement conforme aux lois cinématiques.

5. Procédé de contrôle automatique selon la revendication 4, **caractérisé en ce qu'**on sature la commande de vitesse par l'intermédiaire du calculateur d'injection du véhicule.

6. Procédé de contrôle automatique selon la revendication 4, **caractérisé en ce qu'**on sature la commande de vitesse par l'intermédiaire de la pression du circuit de freinage.

7. Procédé de contrôle automatique selon la revendication 5 ou 6, **caractérisé en ce qu'**on sature la commande de vitesse par l'intermédiaire de la commande en couple du véhicule.

8. Procédé de contrôle automatique selon l'une quelconque des revendications 2 à 7, **caractérisé en ce qu'**on sature la commande de direction.

9. Procédé de contrôle automatique selon l'une quelconque des revendications 2 à 8, **caractérisé en ce qu'**on compare constamment la consigne affichée par l'opérateur et la commande imposée par le calculateur pour ramener la valeur mesurée au niveau de la valeur fournie par le calculateur.

10. Procédé de contrôle automatique selon la revendication 9, **caractérisé en ce qu'**on établit des iso-consignes correspondant à une commande en courbure pour basses vitesses, à une commande en vitesse de lacet pour les vitesses moyennes et à une commande en accélération latérale pour les grandes vitesses.

11. Procédé de contrôle automatique selon l'une quelconque des revendications 2 à 10, **caractérisé en ce qu'**on intègre la cinématique du véhicule pour le sécuriser en évitant les dérapages et les pertes de contrôle du pilote.

12. Procédé de contrôle automatique selon l'une quelconque des revendications 2 à 11, **caractérisé en ce que** la cinématique du véhicule est intégrée sous formes d'ellipses, dans un plan Ax (Accélération longitudinale) / Ay (Accélération latérale) auxquelles sont comparés les points de fonctionnement.

13. Procédé de contrôle automatique selon la revendication 12, **caractérisé en ce que** un point de fonctionnement à l'intérieur d'une première ellipse intérieure (25) autorise une transmission des consignes avancement et direction aux actionneurs, un point de fonctionnement à l'intérieur d'une seconde ellipse intermédiaire (24) est corrigé par une saturation de la consigne d'avancement avant transmission à l'actionneur d'avancement, un point de fonctionnement à l'intérieur d'une troisième ellipse externe (23) est corrigé par une saturation de la consigne d'avancement et de la consigne de direction avant transmission respective aux actionneurs d'avancement et de direction.

14. Procédé de contrôle automatique selon la revendication 12 ou 13 **caractérisé en ce que** les ellipses (23, 24, 25) sont inscrites dans un cercle de rayon fonction de l'adhérence.

## Claims

1. An automatic control system of a bend of a vehicle, comprising:
- a computer (3) integrating cinematic control laws of displacement of said vehicle allowing the determination of at least a diagram in consideration of the characteristics of the vehicle and also its road grip, diagram allowing the determination of at least a security area for the working of the vehicle,
- measurement means (12, 13) of the forward motion V and the yaw speed Ω of said vehicle,
- means to deduce a real working point on said diagram,
- means to measure the orders of forward motion and direction required by an operator (2),
- means to deduce on the diagram a working point required by the operator (2), then in consideration of the difference between these two working points, determine a new working point corrected according to cinematic control laws,
- means to deduce from the corrected set orders in order to control a first forward motion actuator (8) and/or a second steering actuator (9) of said vehicle, so that to ensure the conservation of the vehicle in the working security zone.

2. An automatic control process of a bend of a vehicle (1), in which cinematic control laws of displacement of said vehicle are introduced into a drive-controller computer (3) allowing the determination of at least a diagram in consideration of the characteristics of the vehicle and also its road grip" diagram allowing the determination at least a security zone for the working of the vehicle, measurement of the forward motion V and the yaw speed Ω of said vehicle, deduction on the diagram of a real working point, measurement of a forward motion setting and a steering setting required by an operator (2), deduction from the diagram a working point required by the operator (2), then in consideration of the difference between these two points one determine a new working point corrected according to cinematic control laws, and deduction from the corrected set orders in order to control a first forward motion actuator (8) and/or a second steering actuator (9) of said vehicle, so that to ensure the conservation of the vehicle in the working security zone.

3. An automatic control process according to Claim 2, wherein data related to the road grip (µ) is to be introduced.

4. An automatic control process according to Claim 2 or 3, wherein the speed compatible (VC) with the bend is determined and compared with the current speed (V) of the vehicle to saturate the forward motion speed control and slow down the vehicle according to the difference between the set working point and the working point according to the cinematic laws.

5. An automatic control process according to Claim 4, wherein the speed control is saturated by means of the vehicle injection computer.

6. An automatic control process according to Claim 4, wherein the speed control is saturated by means of the braking circuit pressure.

7. An automatic control process according to Claim 5 or 6, wherein the speed control is saturated by means of the vehicle's torque control.

8. An automatic control process according to anyone of Claims 2 to 7, wherein the steering control of the vehicle is saturated.

9. An automatic control process according to any one of Claims 2 to 8, wherein the control displayed by the operator is constantly compared to the value imposed by the computer to bring the measured value back to the value supplied by the computer.

10. An automatic control process according to Claim 9, wherein iso-settings are established corresponding to bend control for low speeds, to a yaw speed control for the middle speeds and a control for lateral acceleration pour high speeds.

11. An automatic control process according to any one of Claims 2 to 10, wherein the vehicle's kinematics is integrated to make it safe by avoiding skidding and the driver's loss of control.

12. An automatic control process according to any one of Claims 2 to 11, wherein the vehicle's kinematics is integrated in the form of ellipse in a plan Ax (longitudinal acceleration Ax) / Ay (lateral acceleration Ay) with which the working points are compared.

13. An automatic control process according to Claim 12, wherein one working point inside a first internal ellipse (25) permits a transmission of a forward motion setting and a steering setting to the actuators, a working point inside a second ellipse (24) is corrected by a saturation of the forward motion setting before transmission to the forward motion actuator, a working point inside a third external ellipse (23) is corrected by a saturation of the forward motion setting and the steering setting before transmission respectively to the forward motion and steering actuators.

14. A slowing down process according to Claim 12 or 13, wherein the ellipses (23, 24, 25) are included in a circle which radius is representative of the grip.

## Patentansprüche

1. Automatisches Steuersystem in Kurven eines Fahrzeuges, umfassend:
- einen Rechner (3), der kinematische Gesetze zur Steuerung der Bewegung des genannten Fahrzeugs integriert, der es ermöglicht, wenigstens ein Diagramm in Abhängigkeit der Eigenschaften des Fahrzeuges sowie seiner Bodenhaftung zu bestimmen, wobei das Diagramm es ermöglicht, wenigstens eine Sicherheits-Betriebszone für das Fahrzeug zu bestimmen,
- Mittel zum Messen (12, 13) der Vorwärtsgeschwindigkeit V und der Giergeschwindigkeit Ω des Fahrzeugs,
- Mittel, um einen wahren Betriebspunkt in dem Diagramm abzuleiten,
- Mittel, um die von einer Bedienperson (2) gewünschten Einstellwerte für Vorwärtsbewegung und Lenkung zu messen,
- Mittel, um in dem Diagramm einen von der Bedienperson (2) gewünschten Betriebspunkt abzuleiten, dann in Abhängigkeit vom Abstand zwischen diesen beiden Betriebspunkten einen neuen, korrigierten Betriebspunkt in Hinsicht auf die kinematischen Gesetze zu bestimmen,
- Mittel, um korrigierte Sollwertbefehle abzuleiten, um ein erstes Betätigungsglied (8) zur Vorwärtsbewegung und/oder ein zweites Betätigungsglied (9) zur Lenkung des genannten Fahrzeugs zu steuern derartig, dass das Beibehalten des Fahrzeuges in der Sicherheits-Betriebszone gewährleistet wird.

2. Verfahren zur automatischen Steuerung eines Fahrzeuges (1) in Kurven, wobei bei dem Verfahren kinematische Gesetze zur Steuerung der Bewegung des genannten Fahrzeuges in einem Rechner zur Steuerung (3) eingeführt werden, die es ermöglichen, wenigstens ein Diagramm in Abhängigkeit der Eigenschaften des Fahrzeuges sowie seiner Bodenhaftung zu bestimmen, wobei das Diagramm es ermöglicht, wenigstens eine Sicherheits-Betriebszone für das Fahrzeug zu bestimmen, wobei die Vorwärtsgeschwindigkeit V und die Giergeschwindigkeit Q des genannten Fahrzeugs gemessen werden, wobei daraus ein wahrer Betriebspunkt in dem Diagramm abgeleitet wird, wobei die von einer Bedienperson (2) gewünschten Einstellwerte für Vorwärtsbewegung und Lenkung gemessen werden, wobei in dem Diagramm ein von der Bedienperson (2) gewünschter Betriebspunkt abgeleitet wird, dann in Abhängigkeit vom Abstand zwischen diesen beiden Betriebspunkten ein neuer, korrigierter Betriebspunkt in Hinsicht auf die kinematischen Gesetze bestimmt wird und wobei korrigierte Sollwertbefehle abgeleitet werden, um ein erstes Betätigungsglied (8) zur Vorwärtsbewegung und/oder ein zweites Betätigungsglied (9) zur Lenkung des genannten Fahrzeugs zu steuern derartig, dass das Beibehalten des Fahrzeuges in der Sicherheits-Betriebszone gewährleistet wird.

3. Verfahren zur automatischen Steuerung nach Anspruch 2, **dadurch gekennzeichnet, dass** die Einführung einer Information bezüglich der Haftung (µ) des Fahrzeuges am Boden vorgesehen wird.

4. Verfahren zur automatischen Steuerung nach Anspruch 2 oder 3, **dadurch gekennzeichnet, dass** die für die Kurve kompatible Geschwindigkeit (VC) bestimmt wird, die mit der wahren Geschwindigkeit (V) des Fahrzeuges verglichen wird, um die Steuerung der Vorwärtsgeschwindigkeit zu sättigen und das Fahrzeug in Abhängigkeit des Abstandes zwischen dem Soll-Betriebspunkt und dem Betriebspunkt gemäß den kinematischen Gesetzen zu verzögern.

5. Verfahren zur automatischen Steuerung nach Anspruch 4, **dadurch gekennzeichnet, dass** die Geschwindigkeitssteuerung mit Hilfe des Rechners der Einspritzung des Fahrzeuges gesättigt wird.

6. Verfahren zur automatischen Steuerung nach Anspruch 4, **dadurch gekennzeichnet, dass** die Geschwindigkeitssteuerung mit Hilfe des Drucks des Bremskreises gesättigt wird.

7. Verfahren zur automatischen Steuerung nach Anspruch 5 oder 6, **dadurch gekennzeichnet, dass** die Geschwindigkeitssteuerung mit Hilfe der Drehmomentsteuerung des Fahrzeuges gesättigt wird.

8. Verfahren zur automatischen Steuerung nach irgendeinem der Ansprüche 2 bis 7, **dadurch gekennzeichnet, dass** die Lenksteuerung gesättigt wird.

9. Verfahren zur automatischen Steuerung nach irgendeinem der Ansprüche 2 bis 8, **dadurch gekennzeichnet, dass** ständig der durch die Bedienperson angezeigte Einstellwert und der durch den Rechner auferlegte Befehl verglichen werden, um den gemessenen Wert auf das Niveau des durch den Rechner gelieferten Wertes zurückzuführen.

10. Verfahren zur automatischen Steuerung nach Anspruch 9, **dadurch gekennzeichnet, dass** Iso-Einstellwerte festgelegt werden, die einer Kurvensteuerung für niedrige Geschwindigkeiten, einer Steuerung der Giergeschwindigkeit für mittlere Geschwindigkeiten und einer Steuerung der Querbeschleunigung für große Geschwindigkeiten entsprechen.

11. Verfahren zur automatischen Steuerung nach irgendeinem der Ansprüche 2 bis 10, **dadurch gekennzeichnet, dass** die Kinematik des Fahrzeuges integriert wird, um es zu sichern, indem Rutschen und Verlust der Kontrolle des Piloten vermieden werden.

12. Verfahren zur automatischen Steuerung nach irgendeinem der Ansprüche 2 bis 11, **dadurch gekennzeichnet, dass** die Kinematik des Fahrzeugs in Form von Ellipsen in einer Ebene Ax (Längsbeschleunigung) / (Ay (Querbeschleunigung) integriert wird, die mit den Betriebspunkten verglichen werden.

13. Verfahren zur automatischen Steuerung nach Anspruch 12, **dadurch gekennzeichnet, dass** ein Betriebspunkt im Inneren einer ersten, inneren Ellipse (25) eine Übertragung der Einstellwerte der Vorwärtsbewegung und Lenkung zu den Betätigungsgliedern ermöglicht, ein Betriebspunkt im Inneren einer zweiten Zwischen-Ellipse (24) durch eine Sättigung des Einstellwertes der Vorwärtsbewegung vor Übertragung an das Betätigungsglied der Vorwärtsbewegung korrigiert wird, ein Betriebspunkt im Inneren einer dritten, äußeren Ellipse (23) durch eine Sättigung des Einstellwertes der Vorwärtsbewegung und des Einstellwertes der Lenkung vor jeweiliger Übertragung an die Betätigungsglieder der Vorwärtsbewegung und Lenkung korrigiert wird.

14. Verfahren zur automatischen Steuerung nach Anspruch 12 oder 13, **dadurch gekennzeichnet, dass** die Ellipsen (23, 24, 25) in einem Kreis einbeschrieben sind, dessen Radius von der Haftung abhängt.
